(19) Europäisches Patentamt
European Patent Office
Office européen des brevets

(11) Publication number: **0 064 803**
**B1**

(12) **EUROPEAN PATENT SPECIFICATION**

(45) Date of publication of patent specification: **21.11.85**

(51) Int. Cl.[4]: **A 01 N 53/00** // (A01N53/00, 53:00, 53:00)

(21) Application number: **82301459.2**

(22) Date of filing: **22.03.82**

(54) **Insecticidal compositions.**

(30) Priority: **27.04.81 GB 8112931**

(43) Date of publication of application: **17.11.82 Bulletin 82/46**

(45) Publication of the grant of the patent: **21.11.85 Bulletin 85/47**

(84) Designated Contracting States: **BE CH DE FR IT LI NL**

(56) References cited:
**DE-A-2 704 066**
**GB-A-1 441 227**
**GB-A-1 447 193**
**GB-A-2 025 771**
**GB-B-1 413 491**

(73) Proprietor: **IMPERIAL CHEMICAL INDUSTRIES PLC**
**Imperial Chemical House Millbank**
**London SW1P 3JF (GB)**

(72) Inventor: **Alder, Malcolm Ronald**
**1 Lowmond Avenue Caversham Park Village**
**Reading Berkshire (GB)**
Inventor: **Collingwood, John Patrick**
**25 Milpera Crescent**
**Wantirna Victoria 3152 (AU)**

(74) Representative: **Bishop, Nigel Douglas et al**
**Imperial Chemical Industries PLC Legal Department: Patents PO Box 6**
**Welwyn Garden City Herts, AL7 1HD (GB)**

**EP 0 064 803 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This application relates to insecticidal compositions of the type containing more than one pyrethroid type insecticidally active ingredient.

It is known to provide mixtures of two pyrethroid type insecticides. Thus British Patent Specification No 1,447,193 describes an insecticidal composition containing an inert carrier and as active ingredient either a mixture consisting of N-(3,4,5,6-tetrahydrophthalimido)methyl chrysanthemate and 3-phenoxybenzyl 3-(2,2-dichlorovinyl)-2,2-dimethylcyclopropane carboxylate, or a mixture consisting of 2-allyl-3-methylcyclopent-2-en-1-on-4-yl chrysanthemate and 3-phenoxybenzyl 3-(2,2-dichlorovinyl)-2,2-dimethylcyclopropanecarboxylate. These mixtures are intended for use in the control of domestic and insanitary pests such as flies, mosquitos, cockroaches and the like. Unfortunately, it has been found in practise that while the above mixtures may give a satisfactory level of control of one of the pests of the above type, they do not always provide adequate control of the other species at the rates used. Mixtures of bioallethrin and tetromethrin are also disclosed in GB—A—1 441 227 and mixtures of up to four pyrethroids in DE—A—2 704 066. GB—A—2 025 771 discloses three part mixtures involving tetramethrin and allethrin having an improved flushing out action against cockroaches and a rapid knockdown effect and a high lethal effect against harmful insanitary insects.

We have now discovered that sataisfactory control of a broad spectrum of insect pests may be achieved when an insecticidal composition containing three pyrethroid insecticides is used, for example the three mentioned above.

Thus the present invention provides an improved insecticidal composition comprising an inert diluent and as active ingredient a three component mixture consisting of N-(3,4,5,6-tetrahydrophthalimido)methyl chrysanthemate, 2-allyl-3-methylcyclopent-2-en-1-on-4-yl chrysanthemate, and a compound of formula:

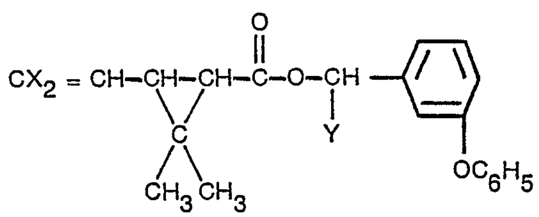

wherein X represents chloro or bromo and Y represents hydrogen or cyano; each component of the mixture being present either as a single isomer or a mixture of isomers; the composition optionally comprising an insecticide synergist.

More particularly, the present invention provides an improved insecticidal composition comprising an inert diluent and as active ingredient a mixture consisting of N-(3,4,5,6-tetrahydrophthalimido)methyl chrysanthemate (hereinafter referred to as compound A), 2-allyl-3-methylcyclopent-2-en-1-on-4-yl chrysanthemate (hereinafter referred to as compound B) and either 3-phenoxybenzyl 3-(2,2-dichlorovinyl)-2,2-dimethylcyclopropane carboxylate (hereinafter compound C) or α-cyano-3-phenoxybenzyl 3-(2,2-dichlorovinyl)-2,2-dimethylcyclopropane carboxylate (hereinafter referred to as compound D). Each of compounds A, B, C and D may be present in the form of a single isomer thereof or in the form of a mixture of isomers, for example a racemic mixture. Thus it will be appreciated that all the compounds are esters of 3-alkenyl-2,2-dimethylcyclopropane carboxylic acids which may exist in four isomeric forms, viz (+)-*cis*, (+)-*trans*, (−)-*cis* and (−)-*trans* forms due to the presence of the asymmetrically substituted carbon atoms at positions 1 and 3 of the cyclopropane ring. Furthermore, in the case of compounds B and D, the esters are formed from alcohols containing a further asymmetrically substituted carbon atom and this leads to two optically distinct isomeric forms of each of the four cyclopropane acid isomers. In the case of compound A, it is preferred that this be present in the form of a mixture of all four isomers designated as (±)-*cis/trans* and generally known by the common name tetramethrin. Compound B is preferably present either as the isomer pair with the (+)-*cis* configuration, (systematic name — (4,RS)-2-allyl-3-methylcyclopent-2-en-1-on-4-yl (1R,3S)-chrysanthemate), generally known by the common name bioallethrin, or more preferably as the single isomer (4,S)-2-allyl-3-methylcyclopent-2-en-1-on-4-yl (1R,3S)-chrysanthemate known by the common name S-bioallethrin. Compounds C and D are preferably used in the form of mixtures of all possible isomers in which about 40—60% by weight of the isomers are *cis* isomers and the remainder *trans* isomers, generally known by the common names permethrin and cypermethrin respectively.

The compositions of this invention contain in addition to the insecticidally active ingredient, an inert diluent, which will normally be a liquid diluent such as odourless kerosine or an aromatic solvent such as mixture of lower alkyl benzenes (eg toluene, ethylbenzene, xylenes or mesitylenes). In addition, the compositions may optionally contain known synergists for pyrethroid insecticides such as sesamex, dodecylimidazole, or piperonyl butoxide.

The compounds A, B and C or D may be present in differing relative proportions depending on the particular isomers of each compound present and the end use for which the composition is intended.

Preferably from 2—5 parts by weight of compound A is used in association with from 0.5 to 2 parts of compound B and from 0.5 to 2 parts of either compound C or D. A mixture containing from 2.5 to 3.5 parts of A, from 0.75 to 1.25 parts of B and from 0.75 to 1.25 parts of C is particularly preferred, especially when compound A is tetramethrin, compound B is S-bioallethrin and compound C is permethrin.

The compositions may be used to combat insect pests in different ways. Thus the composition may be sprayed directly into the air (space sprays) through a thermal fogging machine in which case the diluent will be, for example, diesel oil, or it may be sprayed using an ultra low volume spraying apparatus in which case the diluent may contain a paraffin type hydrocarbon such as white oil, kerosine or the like. Such treatments are particularly useful for combating pests out of doors, for example, by aerial spraying of whole areas of conurbations requiring disinfestation of flies and mosquitos.

The composition may also be dispensed into aerosol containers in conjunction with aerosol propellents eg, chlorofluoromethanes, butane, and the like, for use inside dwellings, storehouses, hospitals and similar buildings.

In a further aspect, the invention provides a composition for use as an aerosol concentrate comprising from 10 to 15% by weight of tetramethrin, from 2 to 4% by weight of S-bioallethrin and from 2 to 4% by weight of permethrin, the remainder of the compositions being an inert liquid diluent consisting of alkylated benzenes. The invention also provides a filled aerosol spray container comprising from 1 to 3% by weight of the filling of the above concentrate in association with an aerosol propellent and optionally a further diluent. This further diluent may contain methylene chloride and kerosine. Preferably the filling contains from 1 to 2% by weight of the concentrate, from 10 to 20% by weight of methylene chloride, from 60 to 80% of the propellent (which is preferably a mixture of chlorofluoromethanes with butane) and from 10 to 15% kerosine.

The compositions of the invention are particularly useful for the control of flying insect pests such as adult houseflies (*Musca domestica*) and mosquitos (*Aedes* spp) as well as cockroaches (*Blattella germanica*) and similar species.

The invention is illustrated by the following Examples:

### Example 1

This Example illustrates the composition of some aerosol concentrates. The insecticidal ingredients were measured out and mixed together and diluted with the diluent.

I

| Ingredients | % (by weight) |
|---|---|
| Permethrin | 4.0 |
| S-bioallethrin | 3.0 |
| Tetramethrin | 14.0 |
| 'Aromasol' H (diluent) | to 100.0 |

'Aromasol' is a Registered Trade Mark. 'Aromasol' H is a mixture of alkylated benzenes consisting principally of mixed xylenes with some mesitylenes and ethyl benzene.

II

| Ingredients | % (by weight) |
|---|---|
| Permethrin | 4.5 |
| Bioallethrin | 4.5 |
| Tetramethrin | 15.0 |
| 'Aromasol' H | to 100.0 |

| | Ingredients | % (by weight) (cont) |
|---|---|---|
| III | Cypermethrin | 3.5 |
| | Bioallethrin | 4.5 |
| | Tetramethrin | 11.0 |
| | 'Aromasol' H | to 100.0 |
| IV | Cypermethrin | 4.0 |
| | Allethrin | 6.0 |
| | Tetramethrin | 12.0 |
| | 'Aromasol' H | to 100.0 |
| V | Cypermethrin | 4.0 |
| | S-bioallethrin | 3.0 |
| | Tetramethrin | 12.0 |
| | 'Aromasol' H | to 100.0 |
| VI | Permethrin | 4.0 |
| | S-bioallethrin | 3.2 |
| | Tetramethrin | 12.0 |
| | 'Aromasol' | to 100.0 |

Example 2

The concentrates of Example 1 were used to prepare filled aerosol spray cans by using 1.25 g of concentrate per 100 g of filling. The composition of the filling was as follows:

| Ingredient | % (by weight) |
|---|---|
| Concentrate | 1.25 |
| Methylene chloride | 18.50 |
| Butane | 30.00 |
| 'Arcton' 11/12 | 40.00 |
| Odourless kerosine | to 100.00 |

'Arcton' is a Registered Trade Mark. 'Arcton' 11/12 is a 1:1 mixture of dichlorodifluoromethane and trichlorofluoromethane.

Example 3

This Example illustrates the superior knock-down effects of the invention compositions in comparison with compositions of the type described in British Patent Specification 1,447,193.

All of the compositions were used as the form of aerosol sprays, prepared according to Example 2. The concentrations of the active ingredients in the compositions was as follows:

| | | % (wt) |
|---|---|---|
| Invention Composition (1) | tetramethrin | 0.15 |
| | S-bioallethrin | 0.04 |
| | permethrin | 0.05 |
| Invention Composition (2) | tetramethrin | 0.125 |
| | bioallethrin | 0.07 |
| | permethrin | 0.05 |
| Reference Composition (3) | tetramethrin | 0.25 |
| | permethrin | 0.075 |
| Reference Composition (4) | S-bioallethrin | 0.04 |
| | permethrin | 0.075 |
| Reference Composition (5) | bioallethrin | 0.06 |
| | permethrin | 0.075 |

The tests were conducted by spraying into the air above cages holding the test insects for a period of 2 seconds and then assessing the knock-down at time intervals over a period of 15 minutes. The time taken to knock-down 50% and 90% of the insects was determined and these times are recorded in decimal minutes in the Table below. For most tests there were 6 replicates of 200 insects each.

| Composition No | *Aedes aegypt* (mosquitos) | | *Musca domestica* (houseflies) | |
|---|---|---|---|---|
| | $KT_{50}$ | $KT_{90}$ | $KT_{50}$ | $KT_{90}$ |
| 1 | 2.35 | 3.80 | 2.2 | 4.4 |
| 2 | 3.05 | 4.4 | 2.8 | 5.5 |
| 3 | 5.2 | 8.35 | 3.0 | 5.7 |
| 4 | 2.75 | 4.45 | 5.35 | 13.5 |
| 5 | 3.3 | 4.5 | 6.4 | 15 |

Invention Composition 1 gave $KT_{50} = 0.64$ and $KT_{90} = 1.03$ in a similar test on cockroaches (Blattella germanica).

From the Table, it will be observed that the invention compositions gave shortest knock-down times with less of the active ingredients than the reference compositions.

**Claims**

1. An insecticidal composition comprising an inert diluent, and, as active ingredient, a 'mixture consisting of N-(3,4,5,6-tetrahydrophthalimido)methyl chrysanthemate, 2-allyl-3-methylcyclopent-2-en-1-on-4-yl chrysanthemate, and a compound of formula:

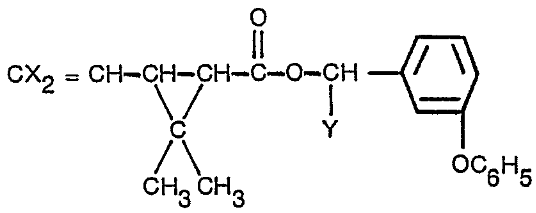

wherein X is chloro or bromo and Y is hydrogen or cyano; each component of the mixture being present either as a single isomer or a mixture of isomers; the composition optionally comprising an insecticide synergist.

2. An insecticidal composition comprising an inert diluene and, as active ingredient, a mixture consisting of N-(3,4,5,6-tetrahydrophthalimide)methyl chrysanthemate, 2-allyl-3-methylcyclopent-2-en-1-on-4-yl chrysanthemate, and either 3-phenoxybenzyl 3-(2,2-dichlorovinyl)-2,2-dimethylcyclopropane carboxylate or α-cyano-3-phenoxybenzyl 3-(2,2-dichlorovinyl)-2,2-dimethylcyclopropane carboxylate.

3. An insecticidal composition according to claim 2 wherein the N-(3,4,5,6-tetrahydrophthalimido)methyl chrysanthemate is present as a mixture of all four possible isomeric forms.

4. An insecticidal composition according to claim 2 wherein the 2-allyl-3-methylcyclopent-2-en-1-on-4-yl chrysanthemate is present as either the isomer pair (4,RS)-2-allyl-3-methylcyclopent-2-en-1-on-4-yl (1R,3S)-chrysanthemate or the single isomer (4S)-2-allyl-3-methylcyclopent-2-en-1-on-4-yl (1R,3S)-chrysanthemate.

5. An insecticidal composition according to claim 2 wherein the 3-phenoxybenzyl or α-cyano-3-phenoxybenzyl 3-(2,2-dichlorovinyl)-2,2-dimethylcyclopropane carboxylate is present as a mixture of all possible isomers in which about 40—60% by weight of the isomers are *cis* isomers.

6. A composition according to claim 1 wherein the inert diluent is selected from odourless kerosine, and lower alkyl benzenes.

7. A composition according to claim 1 comprising an insecticide synergist selected from sesamex, dodecyl imidazole and piperonyl butoxide.

8. A composition according to claim 2 comprising from 2 to 5 parts by weight of N-(3,4,5,6-tetrahydrophthalimido)methyl chrysanthemate, from 0.5 to 2 parts by weight of 2-allyl-3-methylcyclopent-2-en-1-on-4-yl chrysanthemate, and from 0.5 to 2 parts of either 3-phenoxybenzyl or α-cyano-3-phenoxybenzyl 3-(2,2-dichlorovinyl)-2,2-dimethylcyclopropane carboxylate.

9. A composition according to claim 2 for use as an aerosol concentrate comprising from 10% to 15% by weight of (±) *cis/trans* N-(3,4,5,6-tetrahydrophthalimido)methyl chrysanthemate, from 2 to 4% by weight of (4,S)-2-allyl-3-methylcyclopent-2-en-1-on-4-yl (1R,3S)-chrysanthemate, and from 2 to 4% by weight of 3-phenoxybenzyl (±)-*cis/trans*-3-(2,3-dichlorovinyl)-2,2-dimethylcyclopropane carboxylate, the remainder of the composition being an inert liquid diluent consisting of alkylated benzenes.

10. A filled aerosol spray container comprising from 1 to 3% by weight of the composition of claim 2 in association with an aerosol propellent and optionally a further diluent.

11. A filled aerosol spray container according to claim 10 wherein the filling contains from 1 to 2% by weight of the composition of claim 9, from 10 to 20% by weight of methylene chloride, from 60 to 80% by weight of the propellent and from 10 to 15% by weight of kerosine.

12. A method of combating insect pests at a locus which comprises spraying the locus with the composition of claim 1.

**Patentansprüche**

1. Insecticide Zusammensetzung, welche ein inertes Verdünnungsmittel und als aktiven Bestandteil ein Gemisch aus Chrysanthemsäure-N-(3,4,5,6-tetrahydrophthalimido)methyl-ester, Chrysanthemsäure-2-allyl-3-methylcyclopent-2-en-1-on-4-yl-ester und einer Verbindung der Formel

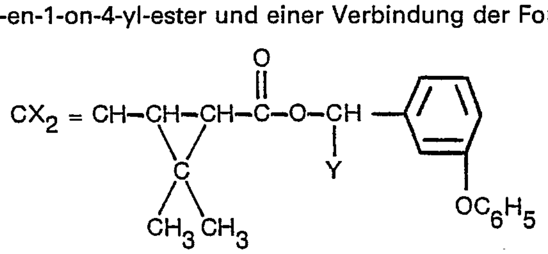

worin X für Chloro oder Bromo und Y für Wasserstoff oder Cyano steht, enthält, wobei jede Komponente des Gemischs entweder als einzelnes Isomer oder als Gemisch von Isomeren vorliegt und wobei die Zusammensetzung gegebenenfalls einen Insecticidsynergisten enthält.

2. Insecticide Zusammensetzung, welche ein inertes Verdünnungsmittel und als aktiven Bestandteil ein Gemisch aus Chrysanthemsäure-N-(3,4,5,6-tetrahydrophthalimido)methyl-ester, Chrysanthemsäure-2-allyl-3-methylcyclopent-2-en-1-on-4-yl-ester und entweder 3-(2,2-Dichlorovinyl)-2,2-dimethylcyclopropancarbonsäure-3-phenoxybenzyl-ester oder 3-(2,2-Dichlorovinyl)-2,2-dimethylcyclopropancarbonsäure-α-cyano-3-phenoxybenzyl-ester enthält.

3. Insecticide Zusammensetzung nach Anspruch 2, in welcher der Chrysanthemsäure-N-(3,4,5,6-tetrahydrophthalimido)methyl-ester als Gemisch aus allen vier möglichen isomeren Formen vorliegt.

4. Insecticide Zusammensetzung nach Anspruch 2, in welcher der Chrysanthemsäure-2-allyl-3-methylcyclopent-2-en-1-on-4-yl-ester entweder als das Isomerenpaar (1R,3S)-Chrysanthemsäure-(4RS)-2-allyl-3-methylcyclopent-2-en-1-on-4-yl-ester oder als das einzelne Isomer (1R,3S)-Chrysanthemsäure-(4S)-2-allyl-3-methylcyclopent-2-en-1-on-4-yl-ester vorliegt.

5. Insecticide Zusammensetzung nach Anspruch 2, in welcher der 3-(2,2-Dichlorovinyl)-2,2-dimethylcyclopropancarbonsäure-3-phenoxybenzyl- oder -α-cyano-3-phenoxybenzyl-ester als Gemisch von allen möglichen Isomeren vorliegt, worin ungefähr 40 bis 60 Gew.-% der Isomere cis-Isomere sind.

6. Zusammensetzung nach Anspruch 1, in welcher das inerte Verdünnungsmittel aus geruchsfreiem Kerosin und Niederalkylbenzolen ausgewählt ist.

7. Zusammensetzung nach Anspruch 1, in welcher der Insecticidsynergist aus Sesamex, Dodecylimidazol und Piperonylbutoxid ausgewählt ist.

8. Zusammensetzung nach Anspruch 2, welche 2 bis 5 Gew.-Teile Chrysanthemsäure-N-(3,4,5,6-tetrahydrophthalimido)methyl-ester, 0,5 bis 2 Gew.-Teile Chrysanthemsäure-2-allyl-3-methylcyclopent-2-en-1-on-4-yl-ester und 0,5 bis 2 Teile 3-(2,2-Dichlorovinyl)-2,2-dimethylcyclopropancarbonsäure-3-phenoxybenzyl- oder -α-cyano-3-phenoxybenzyl-ester enthält.

9. Zusammensetzung nach Anspruch 2 für die Verwendung als Aerosolkonzentrat, welche 10 bis 15 Gew.-% Chrysanthemsäure-(±)-cis/trans-N-(3,4,5,6-tetrahydrophthalimido)methyl-ester, 2 bis 4 Gew.-% (1R,3S)-Chrysanthemsäure-(4S)-2-allyl-3-methylcyclopent-2-en-1-on-4-yl-ester und 2 bis 4 Gew.-% (±)-cis/trans-3-(2,3-Dichlorovinyl)-2,2-dimethylcyclopropancarbonsäure-3-phenoxybenzyl-ester enthält, wobei der Rest der Zusammensetzung aus alkylierten Benzolen als inertes flüssiges Verdünnungsmittel besteht.

10. Gefüllter Aerosolspraybehälter, welcher 1 bis 3 Gew.-% der Zusammensetzung nach Anspruch 2 gemeinsam mit einem Aerosoltreibmittel und gegebenenfalls einem weiteren Verdünnungsmittel enthält.

11. Gefüllter Aerosolspraybehälter nach Anspruch 10, bei welchem die Füllung 1 bis 2 Gew.-% der Zusammensetzung nach Anspruch 9, 10 bis 20 Gew.-% Methylenchlorid, 60 bis 80 Gew.-% des Treibmittels und 10 bis 15 Gew.-% Kerosin enthält.

12. Verfahren zur Bekämpfung von Insektenschädlingen an einem bestimmten Ort, bei welchem auf den bestimmten Ort die Zusammensetzung nach Anspruch 1 aufgesprührt wird.

**Revendications**

1. Composition insecticide, comprenant un diluant inerte et, comme ingrédient actif, un mélange formé de chrysanthémate de N-(3,4,5,6-tétrahydrophtalimido)méthyle, de chrysanthémate de 2-allyl-3-méthylcyclopent-2-ène-1-one-4-yle et d'un composé de formule:

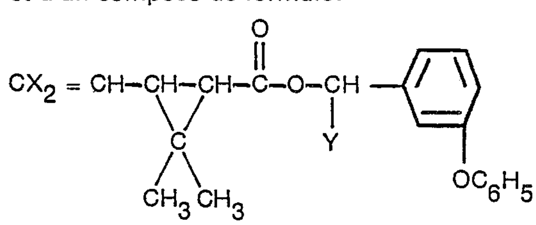

dans laquelle X est un radical chloro ou bromo et Y est l'hydrogène ou un radical cyano; chaque composant du mélange étant présent sous la forme d'un simple isomère ou d'un mélange d'isomères; la composition comprenant éventuellement un agent synergique pour insecticide.

2. Composition insecticide comprenant un diluant inerte et, comme ingrédient actif, un mélange formé de chrysanthémate de N-(3,4,5,6-tétrahydrophtalimido)méthyle, de chrysanthémate de 2-allyl-3-méthylcyclopent-2-ène-1-one-4-yle et de 3-(2,2-dichlorovinyl)-2,2-diméthylcyclopropanecarboxylate de 3-phénoxybenzyle ou de 3-(2,2-dichlorovinyl)-2,2-diméthylcyclopropanecarboxylate d'α-cyano-3-phénoxybenzyle.

3. Composition insecticide suivant la revendication 2, dans laquelle le chrysanthémate de N-(3,4,5,6-tétrahydrophtalimido)méthyle est présent comme mélange des quatre formes isomériques possibles.

4. Composition insecticide suivant la revendication 2, dans laquelle le chrysanthémate de 2-allyl-3-méthylcyclopent-2-ène-1-one-4-yle est présent sous la forme de la paire d'isomères que constitue le (1R,3S)-chrysanthémate de (4,RS)-2-allyl-3-méthylcyclopent-2-ène-1-one-4-yle ou sous la forme de

l'isomère individuel que constitue le (1R,3S)-chrysanthémate de (4S)-2-allyl-3-méthylcyclopent-2-ène-1-one-4-yle.

5. Composition insecticide suivant la revendication 2, dans laquelle le 3-(2,2-dichlorovinyl)-2,2-diméthylcyclopropanecarboxylate de 3-phénoxybenzyle ou d'α-cyano-3-phénoxybenzyle est présent comme mélange de tous les isomères possibles dans lequel environ 40 à 60% en poids des isomères constituent des isomères *cis*.

6. Composition suivant la revendication 1, dans laquelle le diluant inerte est choisi entre le kérosène inodore et des alkylbenzènes à groupe alkyle inférieur.

7. Composition suivant la revendication 1, comprenant un agent synergique pour insecticide choisi entre sesamex, dodécylimidazole et butylate de pipéronyle.

8. Composition suivant la revendication 2, comprenant 2 à 5 parties en poids de chrysanthémate de N-(3,4,5,6-tétrahydrophtalimido)méthyle, 0,5 à 2 parties en poids de chrysanthémate de 2-allyl-3-méthylcyclopent-2-ène-1-one-4-yle et 0,5 à 2 parties de 3-(2,2-dichlorovinyl)-2,2-diméthylcyclopropanecarboxylate de 3-phénoxybenzyle ou d'α-cyano-3-phénoxybenzyle.

9. Composition suivant la revendication 2, destinée à être utilisée comme concentré en aérosol, comprenant 10 à 15% en poids de chrysanthémate de (±)-*cis/trans*-N-(3,4,5,6-tétrahydrophtalimido)méthyle, 2 à 4% en poids de (1R,3S)-chrysanthémate de (4,S)-2-allyl-3-méthylcyclopent-2-ène-1-one-4-yle et 2 à 4% en poids de (±)-*cis/trans*-3-(2,3-dichlorovinyl)-2,2-diméthylcyclopropanecarboxylate de 3-phénoxybenzyle, le reste de la composition étant un diluant liquide inerte formé de benzènes alkylés.

10. Récipient chargé pour la pulvérisation d'un aérosol, comprenant 1 à 3% en poids de la composition suivant la revendication 2 en association avec un propulseur pour aérosol et, le cas échéant, un autre diluant.

11. Récipient chargé pour la pulvérisation d'un aérosol suivant la revendication 10, dans lequel la charge contient 1 à 2% en poids de la composition suivant la revendication 9, 10 à 20% en poids de chlorure de méthylène, 60 à 80% en poids du propulseur et 10 à 15% en poids de kérosène.

12. Procédé pour combattre des insectes parasites en un lieu, qui consiste à pulvériser sur le lieu la composition suivant la revendication 1.